Europäisches Patentamt

European Patent Office

Office européen des brevets

(11) Veröffentlichungsnummer: **0 319 651 B1**

# (12) EUROPÄISCHE PATENTSCHRIFT

(45) Veröffentlichungstag der Patentschrift: **30.10.91**

(51) Int. Cl.⁵: **B60G 15/06**, B60G 11/14

(21) Anmeldenummer: **88112760.9**

(22) Anmeldetag: **05.08.88**

(54) **Radaufhängung.**

(30) Priorität: **08.12.87 DE 3741551**
**22.12.87 DE 3743450**

(43) Veröffentlichungstag der Anmeldung:
**14.06.89 Patentblatt 89/24**

(45) Bekanntmachung des Hinweises auf die
Patenterteilung:
**30.10.91 Patentblatt 91/44**

(84) Benannte Vertragsstaaten:
**AT BE CH DE ES FR GB GR IT LI LU NL SE**

(56) Entgegenhaltungen:
**DE-A- 3 438 591**
**DE-C- 3 519 369**
**GB-A- 1 192 766**
**GB-A- 1 198 713**

(73) Patentinhaber: **Firma Muhr und Bender**
**Kölner Strasse 99**
**W-5952 Attendorn(DE)**

(72) Erfinder: **Muhr, Karl-Heinz, Dr.-Ing.**
**In der Stesse 2**
**W-5952 Attendorn(DE)**
Erfinder: **Schnaubelt, Leo, Dipl.-Ing.**
**Hohler Weg 37**
**W-6342 Haiger 4(DE)**

(74) Vertreter: **Gesthuysen, Hans Dieter, Dipl.-Ing.**
**et al**
**Patentanwälte Gesthuysen + von Rohr**
**Huyssenallee 15 Postfach 10 13 33**
**W-4300 Essen 1(DE)**

**Beschreibung**

Die Erfindung betrifft eine Radaufhängung mit einem einerseits mit der Karosserie und andererseits mit dem Rad verbundenen, eine Schraubendruckfeder (= Tragfeder) und einen Stoßdämpfer aufweisenden, radführenden Federbein und mit einem Querlenker, wobei die Schraubendruckfeder im unbelasteten Zustand eine gekrümmte Federmittellinie aufweist und der Krümmungsradius der Federmittellinie nicht konstant ist.

Bei Radaufhängungen der hier grundsätzlich in Rede stehenden Art, häufig auch McPherson-Aufhängung genannt, ist der bei ansonsten üblichen Radaufhängungen vorhandene obere Querlenker durch ein langhubiges Federbein ersetzt (s. LUEGER "Lexikon der Technik", Band 12 "Lexikon der Fahrzeugtechnik", 1967 Deutsche Verlags-Anstalt GmbH, Seite 425).

Schraubendruckfedern werden in der Regel so ausgeführt, daß die Federmittellinie eine Gerade ist; Abweichungen hiervon sind unbeabsichtigt, fertigungsbedingt und nach Norm toleriert (s. DIN 2096, Teil 2, Abschnitt 8). Dabei fällt die Federkraftwirkungslinie mit der Federmittellinie zusammen.

Bei Radaufhängungen der grundsätzlichen Art, von der die Erfindung ausgeht, kann die Schraubendruckfeder zunächst konzentrisch zur Stoßdämpferachse angeordnet sein. Dabei muß dann die gesamte am oberen Abstützpunkt, also an der Karosserie auftretende Querkraft von der Kolbenstange des Stoßdämpfers aufgenommen werden. Das hat erhebliche Reibungskräfte am Kolben des Stoßdämpfers und in Folge dessen eine ruckelnde Einfederung und Ausfederung zur Folge.

Um die auf die Kolbenstange des Stoßdämpfers wirkenden Querkräfte zu reduzieren, baut man seit längerer Zeit die Schraubendruckfeder so in das Federbein ein, daß die Federkraftwirkungslinie mit der Stoßdämpferachse einen spitzen Winkel bildet. Im Idealfall müßte der Winkel zwischen der Federkraftwirkungslinie der Schraubendruckfeder und der Stoßdämpferachse dem Winkel zwischen der Abstützwirkungslinie und der Stoßdämpferachse entsprechen. Dann wäre im normal belasteten Zustand die Kolbenstange des Stoßdämpfers weitgehend querkraftfrei. Nur beim Einfedern oder Ausfedern - um die statische Gleichgewichtslage = normal belasteter Zustand - würden Querkräfte auftreten. Im allgemeinen kann jedoch der Winkel zwischen der Federkraftwirkungslinie der Schraubendruckfeder und der Stoßdämpferachse nur kleiner als der Winkel zwischen der Abstützwirkungslinie und der Stoßdämpferachse realisiert werden, da die Durchgängigkeit des Stoßdämpfers durch die Schraubendruckfeder und eine hinreichende Freigängigkeit des Rades noch gewährleistet sein müssen.

Durch die ständige Verbreiterung der Reifen und die damit verbundene Verlagerung des Radaufstandspunktes nach außen treten immer größere Winkel zwischen der Abstützwirkungslinie und der Stoßdämpferachse auf, auf die die Federkraftwirkungslinie eingestellt werden müßte, wenn im normal belasteten Zustand die Kolbenstange des Stoßdämpfers querkraftfrei sein soll.

Da nun aus den weiter oben dargelegten Gründen die Schraubendruckfeder in Bezug auf die Stoßdämpferachse nicht so schräg gestellt werden kann, wie das eigentlich wünschenswert wäre, hat man bereits die Federkraftwirkungslinie gegenüber der Federmittellinie verschoben, und zwar durch Schrägstellung einer Endwindung oder beider Endwindungen, durch Verdickung der Endwindungen, durch Schrägstellung der Federteller oder durch Kombinationen der vorbeschriebenen Maßnahmen. Damit kann in Grenzen erreicht werden, daß die Federkraftwirkungslinie am unteren Ende der Schraubendruckfeder weiter außen liegt als die Federmittellinie, während die Federkraftwirkungslinie und die Federmittellinie am oberen Ende der Schraubendruckfeder durch den Abstützpunkt gehen. Dabei ist jedoch noch unbefriedigend, daß der erreichbare Winkel zwischen der Federkraftwirkungslinie und der Stoßdämpferachse immer noch nicht ausreicht und daß die Schraubendruckfeder im mittleren Arbeitsbereich beim Einfedern und Ausfedern zu Windungsberührungen und zum Ausbeulen neigt.

Bei der Radaufhängung, von der die Erfindung konkret ausgeht (vgl. die GB - A - 1,198,713 bzw. die DE - A - 15 05 616), ist ebenfalls die Federkraftwirkungslinie gegenüber der Federmittellinie verschoben, und zwar dadurch, daß die Schraubendruckfeder im unbelasteten Zustand eine gekrümmte Federmittellinie aufweist.

Die zuvor allgemein erläuterte Problematik soll im folgenen noch anhand der Zeichnung ausführlicher erläutert werden; es zeigt

Fig. 1    eine graphische Darstellung zur Erläuterung einer Radaufhängung der in Rede stehenden Art und der dabei auftretenden Querkraft,

Fig. 2    eine der Fig. 1 entsprechende Darstellung einer in gewisser Weise idealen, d. h. querkraftfreien Radaufhängung,

Fig. 3    eine der Fig. 2 entsprechende Darstellung mit schräger gestellter Schraubendruckfeder, ergänzt um die Verhältnisse bei einem besonders breiten Reifen,

Fig. 4    eine der Fig. 3 - besonders breiter Reifen - entsprechende Darstellung mit einer Schraubendruckfeder mit schräg gestellten Endwindungen und

Fig. 5    die Schraubendruckfeder der Radaufhängung, von der die Erfindung konkret ausgeht.

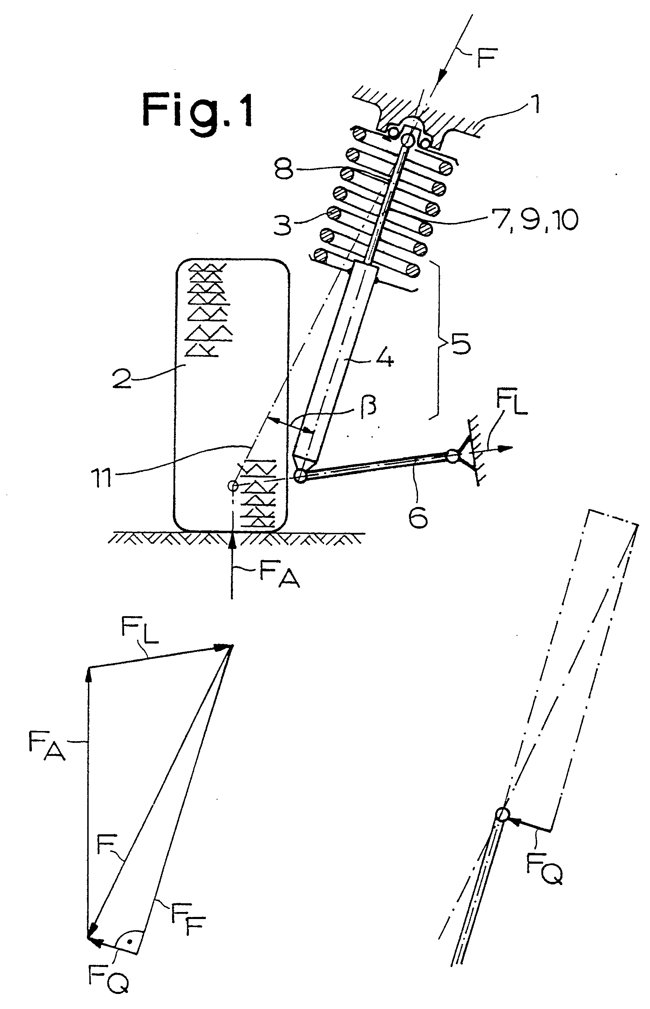

Zu der in den Fig. 1 bis 4 dargestellten Radaufhängung gehört ein einerseits mit der Karosserie 1 und andererseits mit dem Rad 2 verbundenes, eine Schraubendruckfeder 3 und einen Stoßdämpfer 4 aufweisendes Federbein 5 sowie ein
Querlenker 6.

Wie der Fig. 1 zu entnehmen ist, stellt sich
zwischen verschiedenen Kräften ein Kräftegleichgewicht ein, nämlich zwischen der Radaufstandskraft $F_A$, der Querlenkerkraft $F_L$, der Karosserieabstützkraft F, der Schraubendruckfederkraft $F_F$ und
der Querkraft $F_Q$. Die unerwünschte, von der Kolbenstange 8 des Stoßdämpfers 4 aufzunehmende
und zu Reibungskräften am Kolben des Stoßdämpfers 4 führende Querkraft $F_Q$ resultiert daraus, daß
der Winkel $\alpha$ zwischen der Federkraftwirkungslinie
9 der Schraubendruckfeder 3 und der Stoßdämpferachse 10 einerseits und der Winkel $\beta$ zwischen
der Abstützwirkungslinie 11 und der Stoßdämpferachse 10 andererseits nicht gleich sind, die Federkraftwirkungslinie 9 und die Abstützwirkungslinie 11
also nicht zusammenfallen.

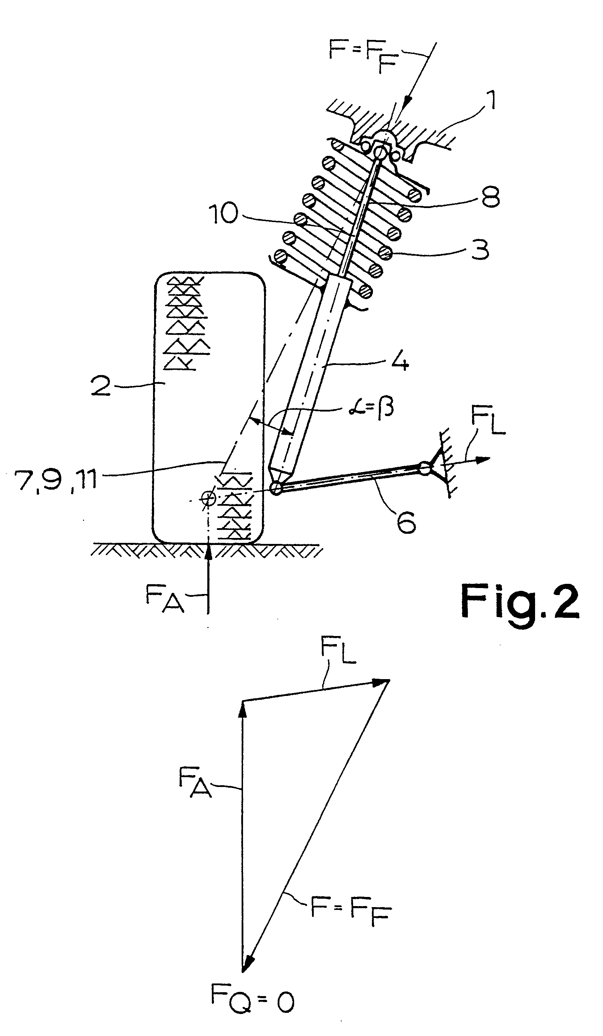

Bei der in Fig. 2 dargestellten Radaufhängung,
die wie die in Fig. 1 dargestellte Radaufhängung
zum Stand der Technik gehört, sind der Winkel $\alpha$
zwischen der Federkraftwirkungslinie 9 der Schraubendruckfeder 3 und der Stoßdämpferachse 10
einerseits und der Winkel $\beta$ zwischen der Abstützwirkungslinie 11 und der Stoßdämpferachse 10 andererseits gleich, die Federkraftwirkungslinie 9 und
die Abstützwirkungslinie 11 fallen also zusammen.
Daraus resuliert, daß die Schraubendruckfederkraft
$F_F$ und die Karosserieabstützkraft F gleich sind, die
Querkraft $F_Q$ also Null ist.

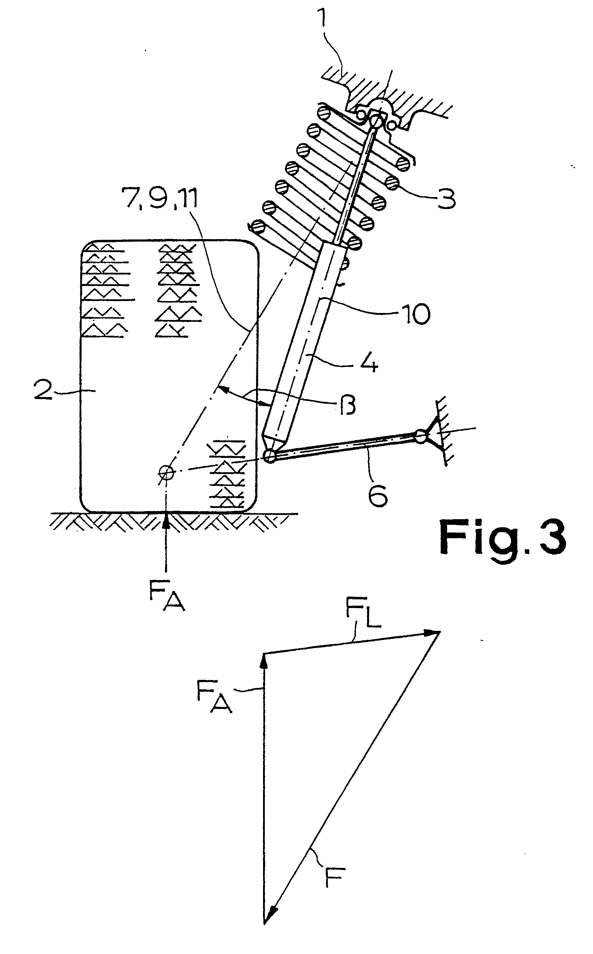

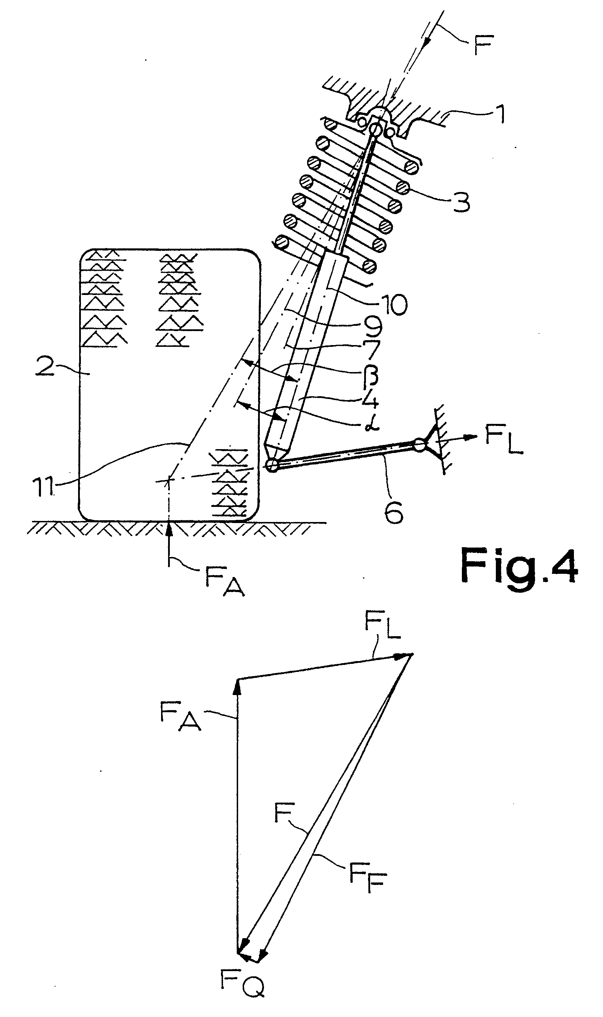

Die Fig. 3 und 4 zeigen die Verhältnisse bei
einer Radaufhängung für ein Rad 2 mit besonders
breitem Reifen. Würde hier, wie das in Fig. 3
dargestellt ist, die Schraubendruckfeder 3 so stark
schräg gestellt, daß wiederum die Federkraftwirkungslinie 9 und die Abstützwirkungslinie 11 zusammenfallen, damit keine Querkraft $F_Q$ auftritt, so
wäre die Durchgängigkeit des Stoßdämpfers 4
durch die Schraubendruckfeder 3 und eine hinreichende Freigängigkeit des Rades 2 nicht gewährleistet. Außerdem würde die Schraubendruckfeder
3 im mittleren Arbeitsbereich beim Einfedern und
Ausfedern zu Windungsberührungen und zum Ausbeulen neigen. Realisierbar sind deshalb nur die in
Fig. 4 dargestellten Verhältnisse, bei denen der
Winkel $\alpha$ zwischen der Federkraftwirkungslinie 9
und der Stoßdämpferachse 10 einerseits und der
Winkel $\beta$ zwischen der Abstützwirkungslinie 11 und
der Stoßdämpferachse 10 andererseits nicht gleich
sind, die Federkraftwirkungslinie 9 und die Abstützwirkungslinie 11 also nicht zusammenfallen. Es verbleibt also eine unerwünschte Querkraft $F_Q$.

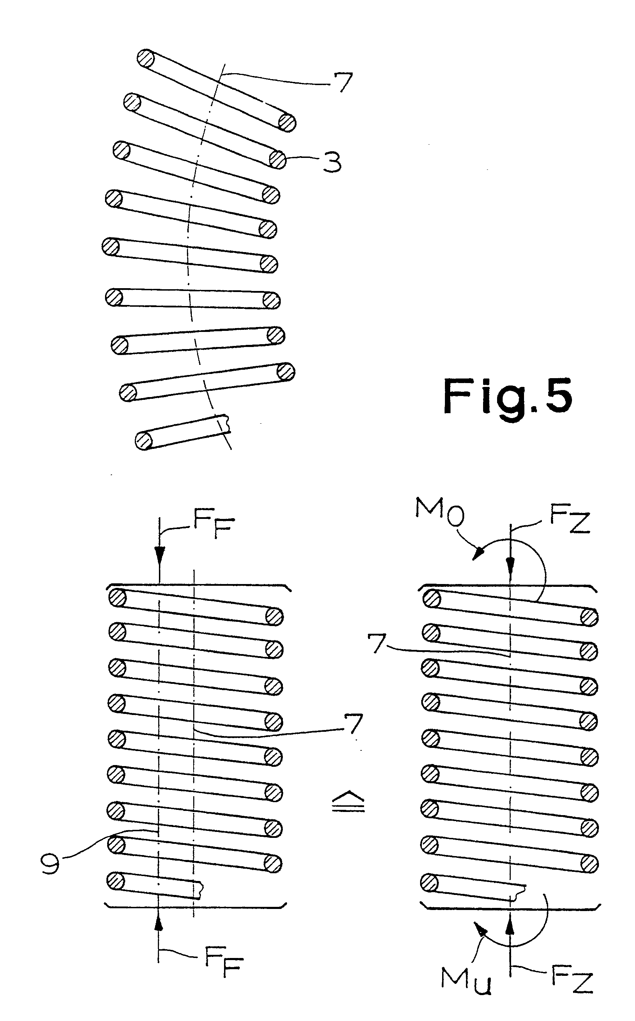

Die Fig. 5 zeigt nun die Schraubendruckfeder
der Radaufhängung, von der die Erfindung konkret
ausgeht. Im unbelasteten, im oberen Teil der Fig. 5
dargestellten Zustand ist die Federmittellinie 7 gekrümmt. Durch die verwirklichte Maßnahme einer
gekrümmten Federmittellinie werden Querkräfte $F_X$,
$F_Y$ bzw. Momente $M_O$, $M_U$ eingeleitet, die dazu
führen, daß die Federkraftwirkungslinie 9 nicht mit
der Federmittellinie 7 zusammenfällt. Daraus resultiert, daß bei ansonsten gleicher Geometrie von
Federbein 5 und Querlenker 6 geringere Querkräfte
$F_Q$ auftreten bzw. Querkräfte $F_Q$ verhindert werden.

Bei der in Fig. 5 dargestellten Schraubendruckfeder 3 ist der Krümmungsradius der Federmittellinie 7 konstant. Das führt zu einer Parallelverschiebung zwischen der Federkraftwirkungslinie 9 und
der Federmittellinie 7.

Der Erfindung liegt nun die Aufgabe zugrunde,
einen weiteren Beitrag zur Lösung der zuvor aufgezeigten Problematik zu leisten, nämlich eine Radaufhängung anzugeben, bei der an der Kolbenstange des Stoßdämpfers auftretende Querkräfte noch
weitgehender eliminiert sind.

Die erfindungsgemäße Radaufhängung, bei der
die zuvor aufgezeigte Aufgabe gelöst ist, ist nun
dadurch gekennzeichnet, daß die Federmittellinie
im unbelasteten Zustand einen etwa S-förmigen
Verlauf hat. Dadurch werden, insbesondere in Verbindung mit entsprechender Gestaltung der Endwindung oder beider Endwindungen und/oder entsprechender Gestaltung der der Krafteinleitung dienenden Federteller, Querkräfte bzw. Momente eingeleitet, die dazu führen, daß bei ansonsten gleicher Geometrie von Federbein und Querlenker geringere Querkräfte auf den Stoßdämpfer wirken.

Bei der erfindungsgemäßen Radaufhängung
kann die Federmittellinie nur in einer Ebene gekrümmt sein, vorzugsweise ist sie jedoch in mehr
als einer Ebene gekrümmt.

Im folgenden wird nun die Erfindung anhand
der Zeichnung nochmals erläutert; es zeigt

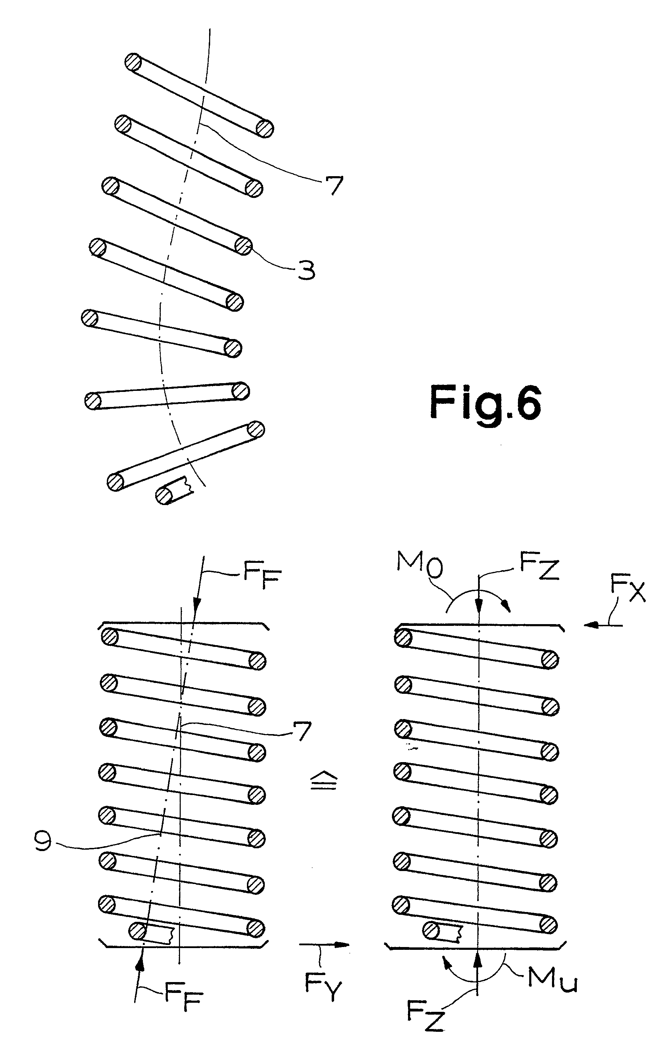

Fig. 6    die Schraubendruckfeder der erfindungsgemäßen Radaufhängung.

Bei der in Fig. 6 dargestellten Schraubendruckfeder 3 ist, wie bei der Schraubendruckfeder nach
Fig. 5, die zum Stand der Technik gehört, die
Federmittellinie 7 gekrümmt. Dabei ist der Krümmungsradius der Federmittellinie 7 nicht konstant
und hat die Federmittellinie 7 einen etwa S-förmigen Verlauf. Dadurch, daß der Krümmungsradius
der Federmittellinie 7 nicht konstant ist, verläuft die
Federkraftwirkungslinie 9 unter einem spitzen Winkel zur Federmittellinie 7.

Während im oberen Teil der Fig. 6 die Schraubendruckfeder 3 im unbelasteten Zustand dargestellt ist, zeigt die Fig. 6 im unteren Teil den
belasteten Zustand, und zwar den normalbelasteten Zustand, d. h. den Ausgangspunkt für den mittleren Arbeitsbereich. Die Schraubendruckfeder 3 ist also insgesamt so dimensioniert, daß sie im belasteten Zustand, also im mittleren Arbeitsbereich, zumindest angenähert Zylinderform hat. Insbesondere ist die Dimensionierung so gewählt, daß die Schraubendruckfeder 3 im gesamten Arbeitsbereich beim Einfedern und beim Ausfedern keine Windungsberührungen aufweist und nicht zu unzulässigem Ausbeulen neigt.

Die im unteren Teil der Fig. 6 links eingezeichnete Federkraftwirkungslinie 9 mit der Schraubendruckfederkraft $F_F$ resultiert aus der Zentralkraft $F_Z$ und den Momenten $M_O$ und $M_U$ bzw. aus der Zentralkraft $F_Z$, den Querkräften $F_X$ und $F_Y$ sowie den Momenten $M_O$ und $M_U$.

## Patentansprüche

1. Radaufhängung mit einem einerseits mit der Karosserie (1) und andererseits mit dem Rad (2) verbundenen, eine Schraubendruckfeder (3) und einen Stoßdämpfer (4) aufweisenden, radführenden Federbein (5) und mit einem Querlenker (6), wobei die Schraubendruckfeder (3) im unbelasteten Zustand eine gekrümmte Federmittellinie (7) aufweist und der Krümmungsradius der Federmittellinie (7) nicht konstant ist, **dadurch gekennzeichnet,** daß die Federmittellinie (7) im unbelasteten Zustand einen S-förmigen Verlauf hat.

2. Radaufhängung nach Anspruch 1, dadurch gekennzeichnet, daß die Schraubendruckfeder (3) im belasteten Zustand, vorzugsweise im mittleren Arbeitsbereich, zumindest angenähert Zylinderform hat.

## Claims

1. A wheel suspension with a wheel-carrying shock-absorbing strut (5), possessing a helical compression spring (3) and a shock-absorber (4) connected at one end to the carriage body (1) and at the other end to the wheel (2), and with a transverse link (6), in which the helical compression spring (3) in the unloaded state possesses a curved central line (7) and the radius of curvature of the central line of the spring (7) is not constant, *characterized in that* in the unloaded condition the central line of the spring (7) has an approximately S-shaped curve.

2. A wheel suspension according to Claim 1, *characterized in that* in the loaded condition, and preferably over the central working range, the helical compression spring (3) has at least an approximately cylindrical shape.

## Revendications

1. Suspension de roue, avec une jambe de suspension (5), menant à la roue, qui est assemblée d'un côté à la carrosserie (1) et de l'autre à la roue (2) et qui présente un ressort hélicoïdal de pression (3) et un amortisseur (4), et avec un bras oscillant transversal (6), le ressort hélicoïdal (3) présentant, à l'état exempt de charge, une ligne médiane de ressort courbe (7), et le rayon de courbure de la ligne médiane de ressort (7) n'étant pas constant, caractérisée en ce que la ligne médiane de ressort (7) possède, à l'état exempt de charge, une allure en forme de S.

2. Suspension de roue selon la revendication 1, caractérisée en ce que le ressort hélicoïdal de pression (3) possède à l'état de charge, de préférence dans la plage de travail moyenne, une forme au moins approximativement cylindrique.

**Fig.1**

Fig.2

**Fig.3**

# Fig.4

Fig.5

Fig.6